# EUROPÄISCHE PATENTSCHRIFT

(11) **EP 2 340 378 B1**
(45) Veröffentlichungstag und Bekanntmachung des Hinweises auf die Patenterteilung: **06.03.2013**
(21) Anmeldenummer: 09783900.5
(22) Anmeldetag: 09.10.2009
(51) Int. Cl.: F16F 15/12

(54) **TORSIONSSCHWINGUNGSDÄMPFERANORDNUNG, INSBESONDERE FÜR DEN ANTRIEBSSTRANG EINES FAHRZEUGS**
TORSIONAL VIBRATION DAMPING ARRANGEMENT, PARTICULARLY FOR THE POWER TRAIN OF A VEHICLE
AGENCEMENT AMORTISSEUR DE VIBRATIONS TORSIONNELLES, EN PARTICULIER POUR LA CHAÎNE CINÉMATIQUE D'UN VÉHICULE

(30) Priorität: 28.10.2008 DE 102008043211
(43) Veröffentlichungstag der Anmeldung: 06.07.2011
(73) Patentinhaber: ZF Friedrichshafen AG, 88038 Friedrichshafen (DE)
(72) Erfinder: FELDHAUS, Reinhard, 97502 Euerbach (DE); WICKEL, Christian, 97797 Wartmannsroth (DE); AMENT, Norbert, 97714 Oerlenbach (DE); MARKOW, Alexander, 97424 Schweinfurt (DE); PETERSEIM, Michael, 97493 Bergrheinfeld (DE); WACK, Erwin, 97464 Niederwerrn (DE); KRÜGER, Thomas, 12683 Berlin (DE)
(86) Internationale Anmeldenummer: PCT/EP2009/063186
(87) Internationale Veröffentlichungsnummer: WO 2010/049255

(56) Entgegenhaltungen:
- DE-A1- 2 736 492
- DE-A1- 2 817 690
- DE-A1- 4 430 262
- DE-A1- 19 747 220
- DE-A1- 19 830 497
- US-A- 2 597 380

## Beschreibung

Die vorliegende Erfindung betrifft eine Torsionsschwingungsdämpferanordnung, insbesondere den Antriebsstrang eines Fahrzeugs, umfassend einen Torsionsschwingungsdämpfer mit einer Primärseite und einer gegen die Wirkung einer Dämpferfederanordnung bezüglich der Primärseite um eine Drehachse drehbaren Sekundärseite, wobei eine Seite von Primärseite und Sekundärseite zwei Deckscheibenelemente umfasst und die andere Seite von Primärseite und Sekundärseite ein zwischen den Deckscheibenelementen angeordnetes Zentralscheibenelement umfasst, wobei die Deckscheibenelemente durch erste Verbindungselemente radial innerhalb der Dämpferfederanordnung miteinander axial fest und zur Drehmomentübertragung verbunden sind.

Eine derartige Torsionsschwingungsdämpferanordnung in Form eines für eine Kupplungsscheibe einer Kraftfahrzeug-Reibungskupplung vorgesehenen Torsionsschwingungsdämpfers ist aus der DE 44 30 262 A1 bekannt. Die beiden sekundärseitigen, also mit einer Kupplungsscheibennabe fest verbundenen Deckscheibenelemente dieser bekannten Torsionsschwingungsdämpferanordnung sind radial innerhalb der näherungsweise in Umfangsrichtung sich erstreckenden Dämpferfedern der Dämpferfederanordnung durch Nietbolzen fest miteinander verbunden. Durch die die Deckscheibenelemente außen übergreifenden Nietköpfe der Nietbolzen sind die beiden Deckscheibenelemente axial aufeinander zu gegen einen dazwischen angeordneten Flanschring gepresst, so dass sich eine feste Baueinheit ergibt, bei welcher einerseits die beiden Deckscheibenelemente durch die Nietbolzen in axialer Richtung sowohl aufeinander zu als auch voneinander weg fest miteinander verbunden sind, als auch ein Drehmoment zwischen den beiden Deckscheibenelementen über diese radial innerhalb der Dämpferfederanordnung angeordneten Nietbolzen übertragen werden kann.

Die DE 27 36 492 C2 offenbart eine Kupplungsscheibe mit einer darin vorgesehenen Torsionsschwingungsdämpferanordnung, bei welcher die beiden Deckscheibenelemente primärseitig liegen, also die Reibbeläge der Kupplungsscheibe tragen. Auch bei dieser Anordnung sind radial innerhalb der Dämpferfederanordnung mit rechteckigem Querschnitt ausgebildete Nietbolzen vorgesehen, die in ihren axialen Endbereichen in entsprechend geformte Durchgriffsöffnungen der Deckscheibenelemente eingreifend positioniert werden und dann zum Bilden von Nietköpfen bzw. die Deckscheibenelemente übergreifenden Abschnitten verformt werden. Bei diesem Verformungsvorgang wird durch den Materialfluss ein zunächst zwischen den axialen Endbereichen der Nietbolzen und den Deckscheibenelementen gebildeter geringfügiger Zwischenraum beseitigt.

Es ist die Aufgabe der vorliegenden Erfindung, eine Torsionsschwingungsdämpferanordnung vorzusehen, bei welcher eine verbesserte Kopplung zwischen den Deckscheibenelementen erzielt wird.

Erfindungsgemäß wird diese Aufgabe gelöst durch eine Torsionsschwingungsdämpferanordnung, insbesondere den Antriebsstrang eines Fahrzeugs, umfassend einen Torsionsschwingungsdämpfer mit einer Primärseite und einer gegen die Wirkung einer Dämpferfederanordnung bezüglich der Primärseite um eine Drehachse drehbaren Sekundärseite, wobei eine Seite von Primärseite und Sekundärseite zwei Deckscheibenelemente umfasst und die andere Seite von Primärseite und Sekundärseite ein zwischen den Deckscheibenelementen angeordnetes Zentralscheibenelement umfasst, wobei die Deckscheibenelemente durch erste Verbindungselemente radial innerhalb der Dämpferfederanordnung miteinander axial fest und zur Drehmomentübertragung verbunden sind.

Dabei ist weiter vorgesehen, dass die Deckscheibenelemente durch zweite Verbindungselemente gegen Bewegung axial voneinander weg miteinander gekoppelt sind, wobei durch die zweiten Verbindungselemente im Wesentlichen kein Drehmoment zwischen den Deckscheibenelementen übertragbar ist.

Bei dem erfindungsgemäßen Aufbau einer Torsionsschwingungsdämpferanordnung ist zunächst dafür gesorgt, dass durch das Vorsehen der zweiten Verbindungselemente radial außerhalb der Dämpferfederanordnung einer durch Fliehkraftbeaufschlagung der Dämpferfederanordnung nach radial außen induzierten Aufspreizung der Deckscheibenelemente entgegengewirkt wird. Dabei ist zu berücksichtigen, dass diese Deckscheibenelemente im Allgemeinen aus Blechmaterial aufgebaut sind und somit aufgrund der Verformbarkeit von derartigem Blechmaterial dazu neigen, sich bei entsprechender Belastung axial voneinander weg zu bewegen.

Da bei dem erfindungsgemäßen Aufbau weiterhin dafür gesorgt ist, dass die zweiten Verbindungselemete im Wesentlichen kein Drehmoment zwischen den Deckscheibenelementen übertragen können, also tatsächlich nur zur Axialabstützung dienen, wird eine Überbestimmung des die beiden Deckscheibenelemente und die ersten Verbindungselemente und die zweiten Verbindungselemente umfassenden Systems vermieden. Eine feste und definierte Verbindung zur Drehmomentübertragung, also auch eine drehfeste Kopplung, der beiden Deckscheibenelemente wird nur durch die radial weiter innen liegenden ersten Verbindungselemente erzeugt, so dass im Bereich der zweiten Verbindungselemente insbesondere in Umfangsrichtung keinerlei Zwängungen oder permanent vorhandene Belastungen entstehen können, der zu einer Überlastung und ggf. sogar zum Bruch der Verbindungselemente führen können.

Um dafür zu sorgen, dass in einfacher Art und Weise die zweiten Verbindungselemente im Wesentlichen nur eine Axialkraft übertragen können, wird weiter vorgeschlagen, dass in Zuordnung zu jedem zweiten Verbindungselement in beiden Deckscheibenelementen jeweils eine Durchgriffsöffnung vorgesehen ist und die zweiten Verbindungselemente mit jedem axialen Endbereich in einer Durchgriffsöffnung aufgenommen sind, und dass bei wenigstens einer Durchgriffsöffnung zwischen einem die Durchgriffsöffnung durchsetzenden Endbereich eines zweiten Verbindungselements und dem die Durchgriffsöffnung aufweisenden Deckscheibenelement wenigstens bereichsweise ein Zwischenraum gebildet ist, wobei vorgesehen sein kann, dass der Zwischenraum eine Relativbewegung zwischen dem zweiten Verbindungselement und dem Deckscheibenelement in einem Bereich von 0,2 mm bis 0,6 mm, vorzugsweise ca. 0,4 mm, ermöglicht.

Das Vorhandensein eines spaltartigen Zwischenraums ermöglicht weiterhin, dass wenigstens ein zweites Verbindungselement bezüglich wenigstens eines Deckscheibenelements verkippbar ist.

Bei einer besonders einfach, gleichwohl jedoch stabil realisierbaren Ausgestaltungsform wird vorgeschlagen, dass die zweiten Verbindungselemente als Nietelemente ausgebildet sind. Dabei ist dann vorzugsweise vorgesehen, dass an den axialen Endbereichen der zweiten Verbindungselemente gebildete Nietköpfe eine Axialabstützung der Deckscheibenelemente bezüglich der zweiten Verbindungselemente ermöglichen.

Die axiale Abstützbarkeit der Deckscheibenelemente, insbesondere in Richtung voneinander weg, kann in einfacher Weise dadurch realisiert werden, dass der wenigstens eine Nietkopf das zugeordnete Deckscheibenelement in seinem eine Durchgriffsöffnung umgebenden Bereich übergreift. Die Deckscheibenelemente können sich dabei also bei entsprechender Axialbelastung direkt gegen einen oder mehrere Nietköpfe anlegen.

Bei einer weiteren Ausgestaltungsform wird vorgeschlagen, dass der wenigstens eine Nietkopf eine an dem zweiten Verbindungselement getragene Abstützscheibe übergreift und die Abstützscheibe das zugeordnete Deckscheibenelement in seinem eine Durchgriffsöffnung umgebenden Bereich übergreift. Hier können sich also die Deckscheibenelemente gegen eine oder mehrere Abstützscheiben legen, so dass die Axialabstützung mittelbar erfolgt, wobei selbstverständlich auch vorgesehen sein kann, dass ein jeweiliger eine Abstützscheibe haltender Nietkopf gleichermaßen so groß gestaltet ist, dass er ein zugeordnetes Deckscheibenelement übergreift.

Bei dieser Ausgestaltungsvariante ist es besonders vorteilhaft, wenn die Abstützscheibe zwischen dem Nietkopf und einem an dem zweiten Verbindungselement gebildeten ersten Abstützbereich festgehalten ist. Durch das Bereitstellen eines ersten Abstützbereichs für eine Abstützscheibe ist sichergestellt, dass beim Umformungsvorgang eines zweiten Verbindungselements zum Erzeugen eines Nietkopfes diese Abstützscheibe in definierter Positionierung bezüglich des Verbindungselements und mithin auch eines zugeordneten Deckscheibenelements gehalten ist. Der Umformungsvorgang beim Vernieten ist somit wesentlich leichter realisierbar, da nicht befürchtet werden muss, dass eine übermäßig starke Verformung eines Verbindungselements das erforderliche Bewegungsspiel zwischen dem Verbindungselement und einem Deckscheibenelement beeinträchtigt.

Bei einer weiteren Ausgestaltungsform kann die Abstützscheibe elastisch verformbar sein.

Um die beiden Deckscheibenelemente auch in Richtung axial aufeinander zu zu sichern, wird weiter vorgeschlagen, dass wenigstens ein zweites Verbindungselement in Zuordnung zu wenigstens einem Deckscheibenelement einen zweiten Abstützbereich aufweist zur Abstützung des Deckscheibenelements gegen Bewegung auf das andere Deckscheibenelement zu.

Auch die ersten Verbindungselemente können vorzugsweise als Nietelemente ausgebildet sein.

Die Dämpferfedern der Dämpferfederanordnung können gegen ungewünschte Radialverlagerung bei Fliehkraftbelastung gesichert werden, wenn vorgesehen wird, dass wenigstens eines der Deckscheibenelemente radial außerhalb der Dämpferfederanordnung sich auf das andere Deckscheibenelement zu erstreckt. zur Bereitstellung einer Radialabstützung für die Dämpferfederanordnung.

Bei einer weiterführenden Ausgestaltungsvariante der erfindungsgemäßen Torsionsschwingungsdämpferanordnung wird vorgeschlagen, dass die Deckscheibenelemente des Torsionsschwingungsdämpfers im Wesentlichen eine Seite von Primärseite und Sekundärseite eines weiteren Torsionsschwingungsdämpfers bereitstellen und die andere Seite von Primärseite und Sekundärseite des weiteren Torsionsschwingungsdämpfers im Wesentlichen durch ein zwischen den Deckscheibenelementen angeordnetes weiteres Zentralscheibenelement bereitgestellt ist, wobei das weitere Zentralscheibenelement gegen die Wirkung einer weiteren Dämpferfederanordnung bezüglich der Deckscheibenelemente um die Drehachse drehbar ist. Hier ist also die Torsionsschwingungsdämpferanordnung zweistufig mit zwei seriell wirksamen Torsionsschwingungsdämpfern aufgebaut, wobei durch die zweiten Verbindungselemente gleichzeitig dafür gesorgt ist, dass auch im Bereich des weiteren Torsionsschwingungsdämpfers eine ungewünschte oder undefinierte Axialbewegung der Deckscheibenelemente bezüglich einander vermieden wird.

Der weitere Torsionsschwingungsdämpfer kann radial außerhalb des Torsionsschwingungsdämpfers angeordnet sein.

Die vorliegende Erfindung betrifft ferner eine hydrodynamische Kopplungseinrichtung, insbesondere hydrodynamischer Drehmomentwandler, umfassend eine erfindungsgemäße Torsionsschwingungsdämpferanordnung im Drehmomentübertagungsweg zwischen einer Überbrückungskupplung und einem Abtriebsorgan.

Ferner betrifft die Erfindung eine nasslaufende Kopplungsanordnung, insbesondere Lamellenkupplung, umfassend eine erfindungsgemäße Torsionsschwingungsdämpferanordnung im Drehmomentübertragungsweg zwischen einer Reibflächenanordnung und einem Abtriebsorgan.

Nachfolgend wird die vorliegende Erfindung mit Bezug auf die beiliegenden Figuren detailliert beschrieben. Es zeigt:
- Fig. 1: eine Torsionsschwingungsdämpferanordnung im Längsschnitt;
- Fig. 2: einen hydrodynamischen Drehmomentwandler mit einer Torsionsschwingungsdämpferanordnung gemäß Fig. 1;
- Fig. 3: eine Detailansicht der Verbindung zweier Deckscheibenelemente der Torsionsschwingungsdämpferanordnung der Fig. 1 mit einem als Nietelement ausgeführten Verbindungselement;
- Fig. 4: eine der Fig. 3 entsprechende Detailansicht;
- Fig. 5: eine weitere, der Fig. 3 entsprechende Detailansicht einer abgewandelten Ausgestaltungsart;
- Fig. 6: eine weitere, der Fig. 3 entsprechende Detailansicht einer abgewandelten Ausgestaltungsart;
- Fig. 7: eine weitere, der Fig. 3 entsprechende Detailansicht einer abgewandelten Ausgestaltungsart; und
- Fig. 8: eine weitere, der Fig. 3 entsprechende Detailansicht einer abgewandelten Ausgestaltungsart.

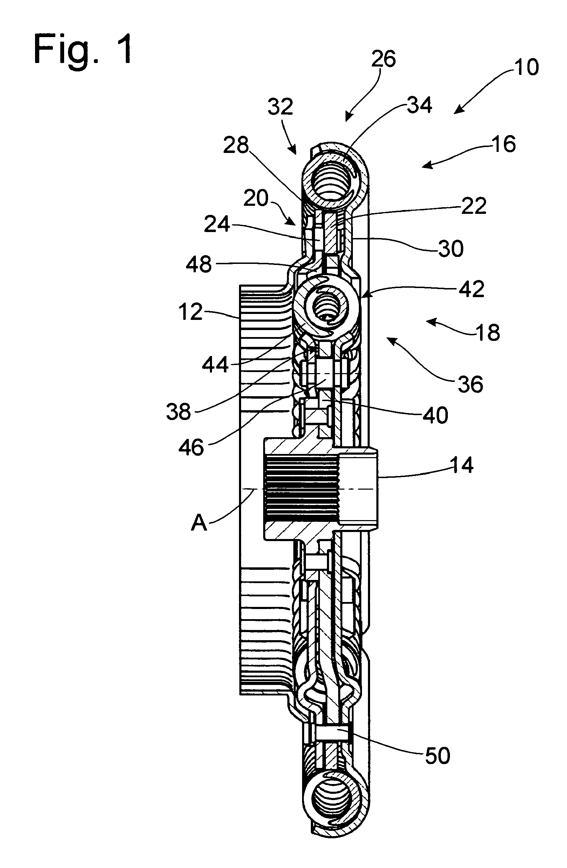

In der Fig. 1 ist eine Torsionsschwingungsdämpferanordnung allgemein mit 10 bezeichnet. Diese nachfolgend in ihrem Aufbau detailliert erläuterte Torsionsschwingungsdämpferanordnung 10 umfasst im Drehmomentenfluss zwischen einem hier als Innenlamellenträger ausgebildeten Antriebselement 12 und einem hier als Nabe ausgebildeten Abtriebselement 14 zwei seriell wirksame Torsionsschwingungsdämpfer 16, 18.

Eine Primärseite 20 des radial äußeren Torsionsschwingungsdämpfers 16 umfasst ein ringscheibenartig ausgebildetes Zentralscheibenelement 22, welches mit dem Antriebselement 12 durch Nietbolzen 24 fest verbunden ist. Eine Sekundärseite 26 des Torsionsschwingungsdämpfers 16 umfasst den radial äußeren Bereich zweier Deckscheibenelemente 28, 30, die in nachfolgend noch erläuterter Art und Weise miteinander verbunden sind. Eine Dämpferfederanordnung 32, umfassend eine Mehrzahl von in Umfangsrichtung aufeinander folgend angeordneten, z. B. als Stahl-Schraubendruckfedern ausgeführte Dämpferfedern 34, wirkt zwischen der Primärseite 20 und der Sekundärseite 26 des Torsionsschwingungsdämpfers 16. Dabei stützen sich die Dämpferfedern 34 am Zentralscheibenelement 22 einerseits und den Deckscheibenelementen 28, 30 andererseits direkt oder über Abstützelemente ab und ermöglichen somit eine Relativdrehung zwischen der Primärseite 20 und der Sekundärseite 26 um eine Drehachse A.

Eine Primärseite 36 des radial inneren Torsionsschwingungsdämpfers 18 umfasst den radial inneren Bereich der beiden Deckscheibenelemente 28, 30. Eine Sekundärseite 38 des Torsionsschwingungsdämpfers 18 umfasst ein Zentralscheibenelement 40, das, ebenso wie das Zentralscheibenelement 22 des radial äußeren Torsionsschwingungsdämpfers 16 ringscheibenartig ausgebildet ist und zwischen den beiden Deckscheibenelementen 28, 30 liegt. Radial innen ist das Zentralscheibenelement 40 beispielsweise durch Vernietung mit dem Abtriebselement 14 fest verbunden. In seinem radial äußeren Bereich wirkt das Zentralscheibenelement 40, ebenso wie die Deckscheibenelemente 28, 30, mit einer Dämpferfederanordnung 42 zusammen, deren Dämpferfedern 44, beispielsweise ebenfalls als Stahl-Schraubendruckfedern ausgeführt, sich bezüglich der Deckscheibenelemente 28, 30 einerseits und des Zentralscheibenelements 40 andererseits abstützen können.

Die beiden Deckscheibenelemente 28, 30 sind radial innerhalb der Dämpferfederanordnung 42 des radial inneren Torsionsschwingungsdämpfers 18 durch eine Mehrzahl von in Umfangsrichtung vorzugsweise in gleichmäßigem Abstand zueinander angeordneten ersten Verbindungselementen, hier ausgebildet als Nietbolzen 46, fest miteinander verbunden. In ihrem zentralen Bereich durchgreifen die Nietbolzen 46 mit Umfangsbewegungsspiel das Zentralscheibenelement 40, so dass gleichzeitig auch eine Relativdrehwinkelbegrenzung für die Primärseite 36 und die Sekundärseite 38 des Torsionsschwingungsdämpfers 18 realisiert ist. Im Falle des radial äußeren Torsionsschwingungsdämpfers 16 können die Nietbolzen 24 eine derartige Funktionalität erfüllen.

Die als erste Verbindungselemente wirksamen Nietbolzen 46 sorgen einerseits durch ihren zentralen verdickten Abschnitt dafür, dass die beiden Deckscheibenelemente in definiertem Axialabstand gehalten sind. Andererseits wird durch diese Nietbolzen 46 eine Drehmomentübertragungsverbindung zwischen den beiden Deckscheibenelementen hergestellt, so dass durch die Nietbolzen 46 die Deckscheibenelemente 28, 30 nicht nur in beiden axialen Richtungen fest miteinander verbunden sind, sondern auch in Umfangsrichtung fest miteinander verbunden sind, sich also nicht bezüglich einander bewegen können.

Man erkennt in der Fig. 1 weiter, dass die beiden Deckscheibenelemente 28, 30 radial außerhalb der Dämpferfedern 44 der Dämpferfederanordnung 42 so geformt sind, dass sie mit nach radial außen und aufeinander zu sich erstreckenden Abschnitten eine Radialabstützung 48 für die Dämpferfedern 44 bilden. Da diese im Rotationsbetrieb fliehkraftbedingt nach außen belastet werden, wird diese Abstützung 48 entsprechend radial belastet, was aufgrund der nach radial außen und aufeinander zu verlaufenden Kontur der beiden Deckscheibenelemente 28, 30 zu einer diese axial auseinander spreizenden Kraft führen kann.

Um dieser Belastung bzw. einem Aufspreizen der Deckscheibenelemente 28, 30 entgegenzuwirken, sind zweite Verbindungselemente, ausgeführt als Nietbolzen 50, im Bereich radial außerhalb der Dämpferfederanordnung 42, jedoch radial innerhalb der Dämpferfederanordnung 32 vorgesehen. Wie im Nachfolgenden noch detailliert erläutert, wirken die als zweite Verbindungselemente vorgesehenen und vorzugsweise ebenfalls mit gleichmäßigem Umfangsabstand angeordneten Nietbolzen 50 einem Aufspreizen der Deckscheibenelemente 28, 30 entgegen, so dass auch bei großer Fliehkraftbelastung diese eine definierte Axialpositionierung insbesondere auch in ihrem radial äußeren Bereich, beibehalten.

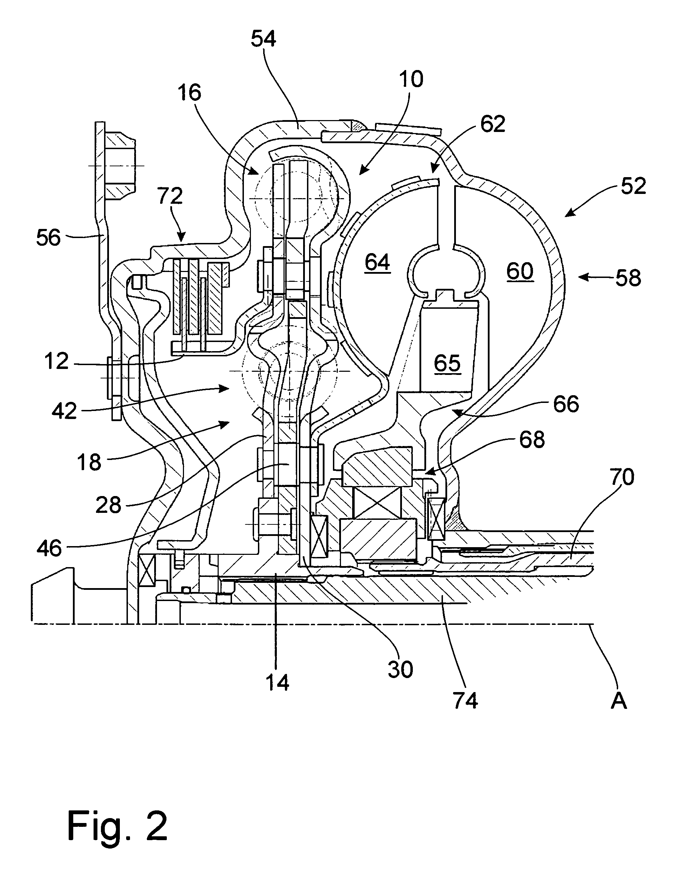

Bevor auf die Funktionalität bzw. den Aufbau dieser Nietbolzen 50 eingegangen wird, wird mit Bezug auf die Fig. 2 ein Anwendungsfall einer derartigen Torsionsschwingungsdämpferanordnung 10 erläutert. Man erkennt in der Fig. 2 einen allgemein mit 52 bezeichneten hydrodynamischen Drehmomentwandler als Beispiel einer hydrodynamischen Kopplungseinrichtung. Der Drehmomentwandler 10 umfasst ein Wandlergehäuse 54, das über eine Kopplungseinrichtung 56 an eine Antriebswelle oder dergleichen angekoppelt werden kann. Am Gehäuse 54 ist ein allgemein mit 58 bezeichnetes Pumpenrad mit einer Mehrzahl von Pumpenradschaufeln 60 gebildet. Im Innenraum des Gehäuses 54 ist ein Turbinenrad 62 vorgesehen, das mit einer Mehrzahl von Turbinenradschaufeln 64 den Pumpenradschaufeln 60 axial gegenüberliegt. Zwischen dem Pumpenrad 58 und dem Turbinenrad 62 liegt ein allgemein mit 66 bezeichnetes Leitrad mit seinen Leitradschaufeln 65. Das Leitrad 66 ist über eine Freilaufanordnung 68 auf einer Stützhohlwelle 70 in einer Richtung um die Drehachse drehbar getragen.

Die Torsionsschwingungsdämpferanordnung 10, welche den in Fig. 1 beschriebenen Aufbau aufweist, ist im Drehmomentübertragungsweg zwischen einer Überbrückungskupplung 72 und einer Getriebeeingangswelle 74 bzw. dem damit drehfest gekoppelten Abtriebselement 14 angeordnet. Die Überbrückungskupplung 72 umfasst eine durch eine Mehrzahl von Reiblamellen gebildete Reibflächenanordnung, und im Einrückzustand der Überbrückungskupplung 72 wird ein Drehmoment vom Gehäuse 54 über den als Antriebselement 12 wirksamen Innenlamellenträger zunächst auf den radial äußeren Torsionsschwingungsdämpfer 16 und von diesem auf den radial inneren Torsionsschwingungsdämpfer 18 geleitet. Das Drehmoment wird über das Abtriebselement 14 auf die Getriebeeingangswelle 74 übertragen.

Das Turbinenrad 62 ist an den zwischen den beiden Torsionsschwingungsdämpfern 16 und 18 liegenden Massebereich, im Wesentlichen gebildet durch die beiden Deckscheibenelemente 28, 30, angekoppelt. Dies kann beispielsweise durch die den festen Zusammenhalt der beiden Deckscheibenelemente 28, 30 radial innerhalb der Dämpferfederanordnung 42 des Torsionsschwingungsdämpfers 18 realisierenden und als erste Verbindungselemente wirksamen Nietbolzen 46 erfolgen. Somit ist auch dann, wenn die Überbrückungskupplung 72 ausgerückt ist und ein Drehmoment auf die Getriebeeingangswelle 74 über das Turbinenrad 62 übertragen wird, der radial innere Torsionsschwingungsdämpfer 18 mit seiner Dämpferfederanordnung 42 schwingungsdämpfend wirksam.

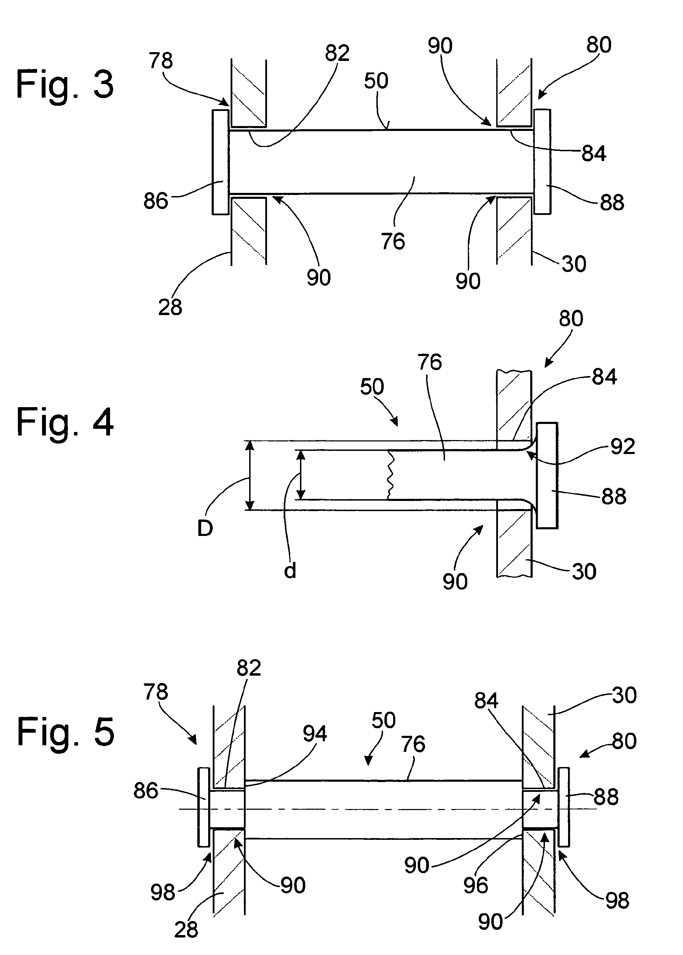

Die Fig. 3 zeigt in Schnittdarstellung die Zusammenwirkung eines als zweites Verbindungselement wirksamen Nietbolzens 50 mit den beiden Deckscheibenelementen 28, 30. Ein Schaftbereich 76 des Nietbolzens 50 durchsetzt in seinen axialen Endbereichen 78, 80 dafür vorgesehene Durchgriffsöffnungen 82, 84 in den Deckscheibenelementen 28, 30. Die am Nietbolzen 50 ebenfalls in den Endbereichen 78, 80 vorgesehenen bzw. gebildeten Nietköpfe 86, 88 übergreifen die Deckscheibenelemente 28, 30 in ihren die Durchgriffsöffnungen 82, 84 umgebenden Bereichen und sorgen somit dafür, dass die Deckscheibenelemente 28, 30 in Richtung voneinander weg sich am Nietbolzen 50 abstützen können.

Man erkennt in der Fig. 3, dass zwischen dem Schaftbereich 76 des Nietbolzens 50 und den Deckscheibenelementen 28, 30 in den Endbereichen 78, 80, in welchen der Schaftbereich 76 die Deckscheibenelemente 28, 30 durchsetzt, ein spaltartiger Zwischenraum 90 gebildet ist. Dieser spaltartige Zwischenraum 90 entsteht durch entsprechende Dimensionierung des Schaftbereichs 76 insbesondere in seinem die Deckscheibenelemente 28, 30 durchsetzenden Bereich einerseits und der Durchgriffsöffnungen 82, 84 andererseits. Wie dies in Fig. 4 veranschaulicht ist, kann beispielsweise der Schaftbereich 76 bei Ausgestaltung mit kreisrundem Querschnitt mit einem Außendurchmesser d ausgebildet sein, der geringer ist, als der Innendurchmesser D der Durchgriffsöffnungen 82, 84. Der so gebildete spaltartige Zwischenraum 90 kann derart dimensioniert sein, dass der Nietbolzen 50 bezüglich der Deckscheibenelemente 28, 30 ein Bewegungsspiel im Bereich von 0,2 bis 0,6 mm aufweist, vorzugsweise etwa 0,4 mm, was bedeutet, dass beispielsweise der Außendurchmesser d um 0,4 mm kleiner ist, als der Innendurchmesser D.

Das Bereitstellen dieses Bewegungsspiels bzw. Zwischenraums 90 sorgt dafür, dass die Deckscheibenelemente 28, 30 sich zwar axial gegen die Nietköpfe 86, 88 anlegen können, aufgrund des ansonsten jedoch mangelnden festen Zusammenhalts zwischen dem Nietbolzen 50 und den Deckscheibenelementen 28, 30 eine mehr oder weniger lose Verbindung besteht, die nicht dazu geeignet ist, ein Drehmoment zwischen den Deckscheibenelementen 28, 30 zu übertragen. Eine Überbestimmung des aus den beiden Deckscheibenelementen 28, 30, den als erste Verbindungselemente wirksamen Nietbolzen 46 und den als zweite Verbindungselemente wirksamen Nietbolzen 50 wird somit vermimieden. Dies hat zur Folge, dass die zweiten Nietbolzen 50 generell nur einer Axiallast und nicht einer Querlast unterliegen, was die Gefahr eines Bruchs derselben vermeidet.

Die Fig. 4 zeigt eine Situation, wie sie sich nach der Umformung eines Nietbolzens 50 beispielsweise zum Bilden des Nietkopfs 88 ergeben kann. Durch den dabei entstehenden Materialfluss wird im Übergangsbereich 92 zwischen dem Schaftbereich 76 und dem Nietkopf 88 kein stufenartiger, sondern ein kontinuierlicher Übergang mit allmählicher Erweiterung vom Schaftbereich 76 zum Nietkopf 88 hin erzeugt. Es kann also eine Situation entstehen, bei der der spaltartige Zwischenraum 90 zwischen dem Schaftbereich 76 und hier dem Deckscheibenelement 30 nicht über die ganze Erstreckungslänge der Durchgriffsöffnung 84 vorhanden ist, sondern beispielsweise an der axial äußeren Seite des Deckscheibenelements 30 dieser Übergangsbereich 92 das Deckscheibenelement 30 kontaktiert. Diese Situation ist jedoch grundsätzlich daher unproblematisch, da selbst in diesem Zustand der Nietbolzen 50 bezüglich des Deckscheibenelements 30 verkippbar bleibt, aufgrund des gekrümmten Übergangsbereichs 92 sich bei einer geringfügigen Kippung jedoch auch geringfügig axial verlagert. Dies führt jedoch nicht zu einer Situation, bei welcher über einen derartigen Nietbolzen 50 ein Drehmoment übertragen werden könnte. Weiterhin wird dieser gekrümmte Übergangsbereich 92 sich nach vergleichsweise kurzer Betriebsdauer verformt haben, da die kantenartige Begrenzung der Durchgriffsöffnungen 84 am Deckscheibenelement 30 sich in das Material des Nietbolzens 50 einarbeiten wird.

Eine abgewandelte Ausgestaltungsform eines derartigen Nietbolzens 50 ist in der Fig. 5 gezeigt. Man erkennt, dass der Schaftbereich 76 des Nietbolzens 50 hier gestuft ausgebildet ist und in den Endbereichen 78, 80 eine Verjüngung an jeweiligen Übergangsstufen 94, 96 erfährt. Durch diese Stufen 94, 96 wird ein Abstützbereich geschaffen, gegen welchen die Deckscheibenelemente 28, 30 sich aufeinander zu anlegen können, so dass einerseits durch die Nietköpfe 86, 88 der maximale Abstand der Deckscheibenelemente 28, 30 bezüglich einander vorgegeben ist, andererseits durch den axialen Abstand der beiden Stufen 94, 96 der minimale Abstand vorgegeben ist. Man erkennt dabei in der Fig. 5, dass zwischen den Nietköpfen 86, 88 und den Außenseiten der Deckscheibenelementen 28, 30 dann, wenn diese sich gegen die Stufen 94, 96 anlegen, ein axialer, spaltartiger Zwischenraum 98 gebildet ist, der diese Relativaxialbewegung zwischen dem Nietbolzen 50 und den Deckscheibenelementen 28, 30 zulässt. In Verbindung mit dem auch hier vorhandenen spaltartigen Zwischenraum 90 im Bereich der jeweiligen Durchgriffsöffnungen 82, 84 ist auch bei dieser Ausgestaltungsorm dafür gesorgt, dass der Nietbolzen 50 bezüglich beiden Deckscheibenelemente 28, 30 in geringem Ausmaß frei bewegbar ist, also sowohl axial verlagerbar ist, als auch in Umfangsrichtung bzw. verkippbar ist, so dass dadurch der axiale Zusammenhalt der Deckscheibenelemente 28, 30 sichergestellt ist, ein Drehmoment zwischen den Deckscheibenelementen 28, 30 jedoch im Wesentlichen nicht übertragen wird.

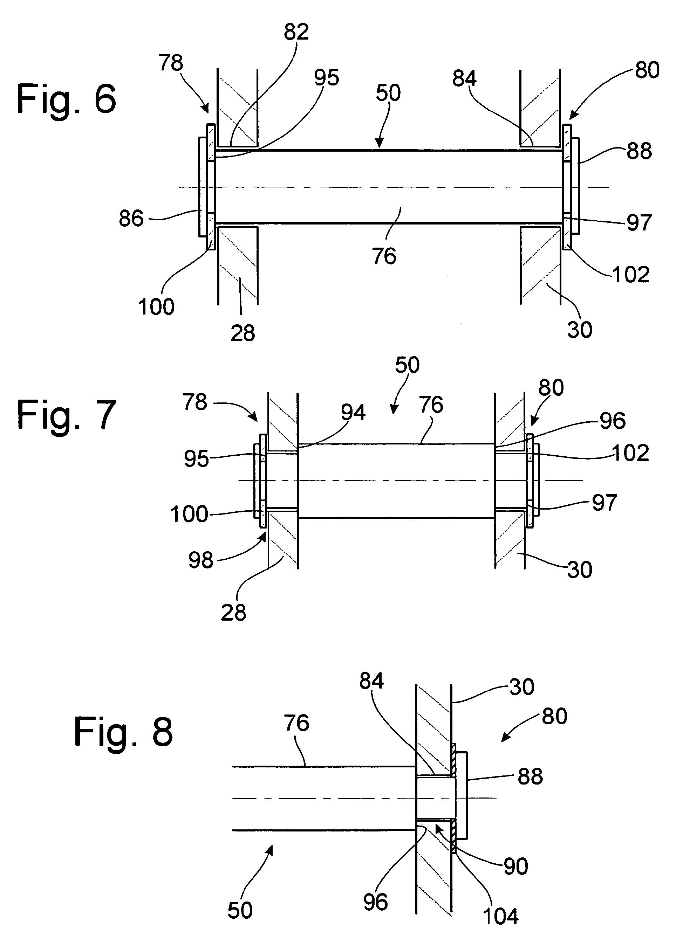

Die Fig. 6 zeigt eine Ausgestaltungsform eines Nietbolzens 50, bei welcher der Schaftbereich 76 in den Endbereichen 78, 80 mit Stufen 95, 97 ausgebildet ist. Diese liegen an derjenigen axialen Positionierung, welche den Maximalabstand der beiden Deckscheibenelemente 28, 30 definiert. An diesen Stufen 95, 97 sind Abstützscheiben 100, 102 axial abgestützt und durch die Nietköpfe 86, 88 somit fest und in definierter Axialpositionierung am Nietbolzen 50 gehalten. Die Abstützscheiben 100, 102 übergreifen die Deckscheibenelemente 28, 30 im Bereich der Durchgriffsöffnungen 82, 84. Man erkennt in der Fig. 6, dass tatsächlich auch die Nietköpfe 86, 88 die Deckscheibenelemente 28, 30 in diesem Bereich geringfügig übergreifen.

Durch das Bereitstellen der Abstützscheiben 100, 102 wird grundsätzlich eine Funktionalität erreicht, die der vorangehend mit Bezug auf die Fig. 3 beschriebenen Funktionalität zur Axialabstützung der Deckscheibenelemente 28, 30 in Richtung voneinander weg entspricht. Da hier diese Axialabstützung durch die Abstützscheiben 100, 102 erfolgt, und zwar an derjenigen axialen Positionierung, an welcher die Stufen 95, 97 gebildet sind, wird ein scharfkantiger Übergang vom Schaftbereich 76 zu dem die Deckscheibenelemente 28, 30 abstützenden Bereich, nämlich den Abstützscheiben 100, 102, erhalten. Die Gefahr, dass durch die Verformung des Nietbolzens 50 beim Bilden der Nietköpfe 86, 88 der vorangehend mit Bezug auf die Fig. 4 erläuterte Übergangsbereich 92 dort gebildet wird, wo die Abstützung der Deckscheibenelemente 28, 30 erfolgt und dadurch auch die Bewegbarkeit des Nietbolzens 50 beeinträchtigt werden könnte, besteht hier praktisch nicht.

Ein weiterer Vorteil liegt darin, dass der Nietverformungsvorgang zum Bilden der Nietköpfe 86, 88 wesentlich leichter durchgeführt werden kann, da die hierzu erforderliche Verformungskraft mit geringerer Sorgfalt aufgebracht werden muss, als bei der Ausgestaltungsform der Fig. 3. Dort muss darauf geachtet werden, dass nicht durch Aufbringen einer zu großen Verformungskraft eine zu starke Verformung der Nietbolzen 50 in den Endbereichen 78, 80 erzeugt wird, welche der Bewegbarkeit bzw. Verkippbarkeit der Nietbolzen 50 entgegenwirken könnte.

Die in Fig. 7 gezeigte Ausgestaltungsform stellt eine Kombination der mit Bezug auf die Fig. 5 und 6 beschriebenen Ausgestaltungsformen dar. Man erkennt, dass der Schaftbereich 76 des Nietbolzens 50 in den Endbereichen 78, 80 jeweils zweifach gestuft ist zum Bilden der Stufen 94, 95 am Endbereich 78 sowie der Stufen 96, 97 am Endbereich 80. Es wird somit wieder ein definierter axialer Zwischenraum 98 eingestellt, der hier definiert gebildet ist zwischen der Stufe 94 und der Abstützscheibe 100 bzw. der Stufe 96 und der Abstützscheibe 102.

Die Fig. 8 zeigt eine Ausgestaltungsform, bei welcher der Nietbolzen 50 in seinem dargestellten Endbereich 80 über eine elastisch verformbare Abstützscheibe 104 bezüglich des Deckscheibenelements 30 abgestützt ist. Der Nietkopf 88 übergreift hier sowohl das Deckscheibenelement 30 im Bereich der Durchgriffsöffnung 84, als auch den radial inneren Bereich der Abstützscheibe 104, die sich wiederum gegen die Außenseite des Deckscheibenelements 30 anlegt. Die Abstützscheibe 104 kann beispielsweise als Tellerfeder oder Elastomerring ausgebildet sein, so dass dafür gesorgt ist, dass der Schaftbereich 76 mit seiner Stufe 96 gegen die Innenseite des Deckscheibenelements 30 gepresst ist, grundsätzlich aber eine gewisse Relativaxialbewegbarkeit zwischen dem Deckscheibenelement 30 und dem Nietbolzen 50 möglich ist. Aufgrund des auch hier vorhandenen spaltartigen Zwischenraums 90 dort, wo der Schaftbereich 76 die Durchgriffsöffnung 84 durchsetzt, besteht die Möglichkeit, dass der Nietbolzen 50 bezüglich des Deckscheibenelements 30 sich einerseits in Umfangsrichtung, hier also in der Zeichenebene oder auch in radialer Richtung, also hier beispielsweise senkrecht zur Zeichenebene, verlagern kann, gleichzeitig aber auch eine Verkippung bezüglich des Deckscheibenelements 30 erfahren kann, so dass auch hier im Wesentlichen kein Drehmoment zwischen den beiden Deckscheibenelementen 28, 30 über die Nietbolzen 50 übertragen werden kann.

Durch die vorangehend beschriebene Ausgestaltung der als zweite Verbindungselemente radial außerhalb der Dämpferfederanordnung 42 wirksamen Nietbolzen 50 und deren Wechselwirkung mit den Deckscheibenelementen 28, 30 wird eine Überbestimmung bei der Verbindung der Deckscheibenelemente 28, 30, die zu einer permanenten Überlastung dieser Nietbolzen 50 führen könnte, vermieden. Gleichwohl wird jedoch ein axiales Aufspreizen der Deckscheibenelemente 28, 30 durch die vermittels der Dämpferfedern 44 nach radial außen ausgeübte Last vermieden.

Es ist selbstverständlich, dass bei dem erfindungsgemäßen Aufbau der Torsionsschwingungsdämpferanordnung 10 insbesondere im Bereich der als zweite Verbindungselemente wirksamen Nietbolzen 50 verschiedene Variations- bzw. Kombinationsmöglichkeiten gegeben sind. So ist grundsätzlich vorzugsweise vorgesehen, dass bei allen Nietbolzen 50 in jeweils beiden Endbereichen die vorangehend mit Bezug auf die verschiedenen Ausgestaltungsformen erläuterte Bewegbarkeit bezüglich der Deckscheibenelemente durch das Vorsehen jeweils spaltartiger Zwischenräume gegeben ist. Es könnten jedoch bei einem Torsionsschwingungsdämpfer in Umfangsrichtung aufeinander folgend verschieden gestaltete Nietbolzen 50 wirksam sein. Auch könnten diese an ihren beiden Endbereichen verschieden gestaltet sein. Weiterhin ist es selbstverständlich, das die Prinzipien der vorliegenden Erfindung auch Anwendung finden können bei einer Torsionsschwingungsdämpferanordnung, die nur einen Torsionsschwingungsdämpfer umfasst, der im Wesentlichen dann so aufgebaut ist, wie bei der in Fig. 1 gezeigten Torsionsschwingungsdämpferanordnung der radial innere Torsionsschwingungsdämpfer. Auch ist es selbstverständlich, dass die erfindungsgemäß aufgebaute Torsionsschwingungsdämpferanordnung in anderen Systemen eines Antriebsstrangs, beispielsweise einer als Anfahrelement auch wirksamen nasslaufenden Lamellenkupplung oder dergleichen, eingesetzt werden kann.

## Patentansprüche

1. Torsionsschwingungsdämpferanordnung, insbesondere für den Antriebsstrang eines Fahrzeugs, umfassend einen Torsionsschwingungsdämpfer (18) mit einer Primärseite (36) und einer gegen die Wirkung einer Dämpferfederanordnung (42) bezüglich der Primärseite (36) um eine Drehachse (A) drehbaren Sekundärseite (38), wobei eine Seite von Primärseite (36) und Sekundärseite (38) zwei Deckscheibenelemente (28, 30) umfasst und die andere Seite von Primärseite (36) und Sekundärseite (38) ein zwischen den Deckscheibenelementen (28, 30) angeordnetes Zentralscheibenelement (40) umfasst, wobei die Deckscheibenelemente (28, 30) durch erste Verbindungselemente (46) radial innerhalb der Dämpferfederanordnung (42) miteinander axial fest und zur Drehmomentübertragung verbunden sind,
**dadurch gekennzeichnet, dass** die Deckscheibenelemente (28, 30) durch zweite Verbindungselemente (50) gegen Bewegung axial voneinander weg miteinander gekoppelt sind, wobei durch die zweiten Verbindungselemente (50) im Wesentlichen kein Drehmoment zwischen den Deckscheibenelementen (28, 30) übertragbar ist.

2. Torsionsschwingungsdämpferanordnung nach Anspruch 1,
**dadurch gekennzeichnet, dass** in Zuordnung zu jedem zweiten Verbindungselement (50) in beiden Deckscheibenelementen (28, 30) jeweils eine Durchgriffsöffnung (82, 84) vorgesehen ist und die zweiten Verbindungselemente (56) mit jedem axialen Endbereich (78, 80) in einer Durchgriffsöffnung (82, 84) aufgenommen sind, und dass bei wenigstens einer Durchgriffsöffnung (82, 84) zwischen einem die Durchgriffsöffnung (82, 84) durchsetzenden Endbereich (78, 80) eines zweiten Verbindungselements (50) und dem die Durchgriffsöffnung (82, 84) aufweisenden Deckscheibenelement (28, 30) wenigstens bereichsweise ein Zwischenraum (90) gebildet ist.

3. Torsionsschwingungsdämpferanordnung nach Anspruch 2,
**dadurch gekennzeichnet, dass** der Zwischenraum (90) eine Relativbewegung zwischen dem zweiten Verbindungselement (50) und dem Deckscheibenelement (28, 30) in einem Bereich von 0,2 mm bis 0,6 mm, vorzugsweise ca. 0,4 mm, ermöglicht.

4. Torsionsschwingungsdämpferanordnung nach Anspruch 2 oder 3,
**dadurch gekennzeichnet, dass** wenigstens ein zweites Verbindungselement (50) bezüglich wenigstens eines Deckscheibenelements (28, 30) verkippbar ist.

5. Torsionsschwingungsdämpferanordnung nach einem der Ansprüche 1 bis 4,
**dadurch gekennzeichnet, dass** die zweiten Verbindungselemente (50) als Nietelemente ausgebildet sind.

6. Torsionsschwingungsdämpferanordnung nach Anspruch 2 und Anspruch 5,
**dadurch gekennzeichnet, dass** an den axialen Endbereichen (78, 80) der zweiten Verbindungselemente (50) gebildete Nietköpfe (86, 88) eine Axialabstützung (28, 30) der Deckscheibenelemente bezüglich der zweiten Verbindungselemente (50) ermöglichen.

7. Torsionsschwingungsdämpferanordnung nach Anspruch 6,
**dadurch gekennzeichnet, dass** wenigstens ein Nietkopf (86, 88) das zugeordnete Deckscheibenelement (28, 30) in seinem eine Durchgriffsöffnung (82, 84) umgebenden Bereich übergreift.

8. Torsionsschwingungsdämpferanordnung nach Anspruch 6 oder 7,
**dadurch gekennzeichnet, dass** wenigstens ein Nietkopf (86, 88) eine an dem zweiten Verbindungselement (50) getragene Abstützscheibe (100, 102; 104) übergreift und die Abstützscheibe (100, 102; 104) das zugeordnete Deckscheibenelement (28, 30) in seinem eine Durchgriffsöffnung (82, 84) umgebenden Bereich übergreift.

9. Torsionsschwingungsdämpferanordnung nach Anspruch 8,
**dadurch gekennzeichnet, dass** die Abstützscheibe (100, 102) zwischen dem Nietkopf (86, 88) und einem an dem zweiten Verbindungselement (50) gebildeten ersten Abstützbereich (95, 97) festgehalten ist.

10. Torsionsschwingungsdämpferanordnung nach Anspruch 8 oder 9,
**dadurch gekennzeichnet, dass** die Abstützscheibe (104) elastisch verformbar ist.

11. Torsionsschwingungsdämpferanordnung nach einem der Ansprüche 6 bis 10,
**dadurch gekennzeichnet, dass** zwischen wenigstens einem Nietkopf (86, 88) und dem zugeordneten Deckscheibenelement (28, 30) wenigstens bereichsweise ein eine Axialbewegbarkeit zwischen dem zweiten Verbindungselement (50) und dem Deckscheibenelement (28, 30) ermöglichender Zwischenraum (98) gebildet ist.

12. Torsionsschwingungsdämpferanordnung nach einem der Ansprüche 1 bis 11,
**dadurch gekennzeichnet, dass** wenigstens ein zweites Verbindungselement (50) in Zuordnung zu wenigstens einem Deckscheibenelement (28, 30) einen zweiten Abstützbereich (94, 96) aufweist zur Abstützung des Deckscheibenelements (28, 30) gegen Bewegung auf das andere Deckscheibenelement (28, 30) zu.

13. Torsionsschwingungsdämpferanordnung nach einem der Ansprüche 1 bis 12,
**dadurch gekennzeichnet, dass** die ersten Verbindungselemente (46) als Nietelemente ausgebildet sind.

14. Torsionsschwingungsdämpferanordnung nach einem der Ansprüche 1 bis 13,
**dadurch gekennzeichnet, dass** wenigstens eines der Deckscheibenelemente (28, 30) radial außerhalb der Dämpferfederanordnung (42) sich auf das andere Deckscheibenelement (28, 30) erstreckt zur Bereitstellung einer Radialabstützung (48) für die Dämpferfederanordnung (42).

15. Torsionsschwingungsdämpferanordnung nach einem der Ansprüche 1 bis 14,
**dadurch gekennzeichnet, dass** die Deckscheibenelemente (28, 30) des Torsionsschwingungsdämpfers (18) im Wesentlichen eine Seite von Primärseite (20) und Sekundärseite (36) eines weiteren Torsionsschwingungsdämpfers (16) bereitstellen und die andere Seite von Primärseite (20) und Sekundärseite (26) des weiteren Torsionsschwingungsdämpfers (16) im Wesentlichen durch ein zwischen den Deckscheibenelementen (28, 30) angeordnetes weiteres Zentralscheibenelement (22) bereitgestellt ist, wobei das weitere Zentralscheibenelement (22) gegen die Wirkung einer weiteren Dämpferfederanordnung (32) bezüglich der Deckscheibenelemente (28, 30) um die Drehachse (A) drehbar ist.

16. Torsionsschwingungsdämpferanordnung nach Anspruch 15,
**dadurch gekennzeichnet, dass** der weitere Torsionsschwingungsdämpfer (16) radial außerhalb des Torsionsschwingungsdämpfers (18) angeordnet ist.

17. Hydrodynamische Kopplungseinrichtung, insbesondere hydrodynamischer Drehmomentwandler, umfassend eine Torsionsschwingungsdämpferanordnung (10) nach einem der vorhergehenden Ansprüche im Drehmomentübertagungsweg zwischen einer Überbrückungskupplung (72) und einem Abtriebsorgan (14).

18. Nasslaufende Kopplungsanordnung, insbesondere Lamellenkupplung, umfassend eine Torsionsschgungsdämpferanordnung (10) nach einem der 1 bis 16 Ansprüche im Drehmomentübertragungsweg zwischen einer Reibflächenanordnung und einem Abtriebsorgan.

## Claims

1. Torsional vibration damping arrangement, particularly for the power train of a vehicle, comprising a torsional vibration damper (18) having a primary side (36) and a secondary side (38) which can rotate about a rotational axis (A) with respect to the primary side (36) counter to the effect of a damping spring arrangement (42), wherein one side of the primary side (36) and secondary side (38) comprises two cover plate elements (28, 30), and the other side of the primary side (36) and secondary side (38) comprises a central plate element (40) arranged between the cover plate elements (28, 30) wherein by means of first connecting elements (46) the cover plate elements (28, 30) are connected to one another radially within the damping spring arrangement (42) in an axially fixed fashion for the purpose of transmitting torque,
**characterized in that** the cover plate elements (28, 30) are coupled to one another by means of second connecting elements (50) in order to prevent movement axially away from one another, wherein virtually no torque can be transmitted between the cover plate elements (28, 30) by means of the second connecting elements (50) .

2. Torsional vibration damping arrangement according to Claim 1,
**characterized in that**, in an assignment to every second connecting element (50), an engagement opening (82, 84) is provided in each of the two cover plate elements (28, 30), and the second connecting elements (56) are accommodated by each axial end region (78, 80) in an engagement opening (82, 84) and **in that** in at least one engagement opening (82, 84) an intermediate space (90) is formed, at least in a certain area, between an end region (78, 80), penetrating the engagement opening (82, 84), of a second connecting element (50) and the cover plate element (28, 30) which has the engagement opening (82, 84).

3. Torsional vibration damping arrangement according to Claim 2,
**characterized in that** the intermediate space (90) permits a relative movement between the second connecting element (50) and the cover plate element (28, 30) in a range from 0.2 mm to 0.6 mm, preferably approximately 0.4 mm.

4. Torsional vibration damping arrangement according to Claim 2 or 3,
**characterized in that** at least one second connecting element (50) can be tilted with respect to at least one cover plate element (28, 30).

5. Torsional vibration damping arrangement according to one of Claims 1 to 4,
**characterized in that** the second connecting elements (50) are embodied as rivet elements.

6. Torsional vibration damping arrangement according to Claims 2 and 5,
**characterized in that** the rivet heads (86, 88) which are formed at the axial end regions (78, 80) of the second connecting elements (50) permit an axial support (28, 30) of the cover plate elements with respect to the second connecting elements (50).

7. Torsional vibration damping arrangement according to Claim 6,
**characterized in that** at least one rivet head (86, 88) engages over the assigned cover plate element (28, 30) in its region surrounding an engagement opening (82, 84).

8. Torsional vibration damping arrangement according to Claim 6 or 7,
**characterized in that** at least one rivet head (86, 88) engages over a support plate (100, 102; 104) which is supported on the second connecting element (50), and the support plate (100, 102; 104) engages over the assigned cover plate element (28, 30) in its region surrounding an engagement opening (82, 84).

9. Torsional vibration damping arrangement according to Claim 8,
**characterized in that** the support plate (100, 102) is secured between the rivet head (86, 88) and a first support region (95, 97) formed on the second connecting element (50).

10. Torsional vibration damping arrangement according to Claim 8 or 9,
**characterized in that** the support plate (104) is elastically deformable.

11. Torsional vibration damping arrangement according to one of Claims 6 to 10,
**characterized in that** an intermediate space (98) which permits axial mobility between the second connecting element (50) and the cover plate element (28, 30) is formed between at least one rivet head (86, 88) and the assigned cover plate element (28, 30), at least in a certain area.

12. Torsional vibration damping arrangement according to one of Claims 1 to 11,
**characterized in that** at least one second connecting element (50) has, in an assignment to at least one cover plate element (28, 30), a second support region (94, 96) for supporting the cover plate element (28, 30) against movement toward the other cover plate element (28, 30).

13. Torsional vibration damping arrangement according to one of Claims 1 to 12,
**characterized in that** the first connecting elements (46) are embodied as rivet elements.

14. Torsional vibration damping arrangement according to one of Claims 1 to 13,
**characterized in that** at least one of the cover plate elements (28, 30) extends radially outside the damping spring arrangement (42), to the other cover plate element (28, 30) in order to make available radial support (48) for the damping spring arrangement (42).

15. Torsional vibration damping arrangement according to one of Claims 1 to 14,
**characterized in that** the cover plate elements (28, 30) of the torsional vibration damper (18) substantially make available one side of the primary side (20) and secondary side (36) of a further torsional vibration damper (16), and the other side of the primary side (20) and secondary side (26) of the further torsional vibration damper (16) is made available, substantially by means of a further central plate element (22) arranged between the cover plate elements (28, 30), wherein the further central plate element (22) is rotatable about the rotational axis (A) with respect to the cover plate elements (28, 30) counter to the effect of a further damping spring arrangement (32) .

16. Torsional vibration damping arrangement according to Claim 15,
**characterized in that** the further torsional vibration damper (16) is arranged radially outside the torsional vibration damper (18).

17. Hydrodynamic coupling device, in particular hydrodynamic torque converter, comprising a torsional vibration damping arrangement (10) according to one of the preceding claims in the torque transmission path between a lock-up clutch (72) and an output element (14).

18. Wet-running clutch arrangement, in particular multi-disc clutch, comprising a torsional vibration damping arrangement (10) according to one of Claims 1 to 16, in the torque transmission path between a friction surface arrangement and an output element.

## Revendications

1. Agencement d'amortisseur de vibrations torsionnelles, en particulier pour la chaîne cinématique d'un véhicule, comprenant un amortisseur de vibrations torsionnelles (18) avec un côté primaire (36) et un côté secondaire (38) pouvant tourner autour d'un axe de rotation (A) à l'encontre de l'effet d'un agencement de ressort amortisseur (42) par rapport au côté primaire (36), un côté, le côté primaire (36) ou le côté secondaire (38), comprenant deux éléments de disque de recouvrement (28, 30) et l'autre côté, le côté primaire (36) ou le côté secondaire (38), comprenant un élément de disque central (40) disposé entre les éléments de disque de recouvrement (28, 30), les éléments de disque de recouvrement (28, 30) étant connectés par des première éléments de liaison (46) radialement à l'intérieur de l'agencement de ressort amortisseur (42) l'un à l'autre axialement et fixement, et en vue du transfert de couple,
**caractérisé en ce que** les éléments de disques de recouvrement (28, 30) sont accouplés l'un à l'autre par des deuxièmes éléments de liaison (50) contre un mouvement axialement à l'écart l'un de l'autre, substantiellement aucun couple ne pouvant être transmis entre les éléments de disque de recouvrement (28, 30) par les deuxièmes éléments de liaison (50).

2. Agencement d'amortisseur de vibrations torsionnelles selon la revendication 1,
**caractérisé en ce qu'**une ouverture d'engagement (82, 84) est à chaque fois prévue en association avec chaque deuxième élément de liaison (50), dans les deux éléments de disque de recouvrement (28, 30) et les deuxièmes éléments de liaison (56) sont reçus avec chaque région d'extrémité axiale (78, 80) dans une ouverture d'engagement (82, 84), et **en ce que** dans le cas d'au moins une ouverture d'engagement (82, 84), un espace intermédiaire (90) est formé au moins en partie entre une région d'extrémité (78, 80) traversant l'ouverture d'engagement (82, 84) d'un deuxième élément de liaison (50) et l'élément de disque de recouvrement (28, 30) présentant l'ouverture d'engagement (82, 84).

3. Agencement d'amortisseur de vibrations torsionnelles selon la revendication 2,
**caractérisé en ce que** l'espace intermédiaire (90) permet un déplacement relatif entre le deuxième élément de liaison (50) et l'élément de disque de recouvrement (28, 30) dans une plage de 0,2 mm à 0,6 mm, de préférence d'environ 0,4 mm.

4. Agencement d'amortisseur de vibrations torsionnelles selon la revendication 2 ou 3,
**caractérisé en ce qu'**au moins un deuxième élément de liaison (50) peut être basculé par rapport à au moins un élément de disque de recouvrement (28, 30).

5. Agencement d'amortisseur de vibrations torsionnelles selon l'une quelconque des revendications 1 à 4,
**caractérisé en ce que** les deuxièmes éléments de liaison (50) sont réalisés sous forme d'éléments de rivetage.

6. Agencement d'amortisseur de vibrations torsionnelles selon la revendication 2 et la revendication 5,
**caractérisé en ce que** des têtes de rivets (86, 88) formées au niveau des régions d'extrémité axiales (78, 80) des deuxièmes éléments de liaison (50) permettent un support axial (28, 30) des éléments de disques de recouvrement par rapport aux deuxièmes éléments de liaison (50).

7. Agencement d'amortisseur de vibrations torsionnelles selon la revendication 6,
**caractérisé en ce qu'**au moins une tête de rivet (86, 88) vient en prise par-dessus l'élément de disque de recouvrement associé (28, 30) dans sa région entourant une ouverture d'engagement (82, 84).

8. Agencement d'amortisseur de vibrations torsionnelles selon la revendication 6 ou 7,
**caractérisé en ce qu'**au moins une tête de rivet (86, 88) vient en prise par-dessus un disque d'appui (100, 102 ; 104) porté sur le deuxième élément de liaison (50), et le disque d'appui (100, 102 ; 104) vient en prise par-dessus l'élément de disque de recouvrement associé (28, 30) dans sa région entourant une ouverture d'engagement (82, 84).

9. Agencement d'amortisseur de vibrations torsionnelles selon la revendication 8,
**caractérisé en ce que** le disque d'appui (100, 102) est fixé entre la tête de rivet (86, 88) et une première région d'appui (95, 97) formée sur le deuxième élément de liaison (50).

10. Agencement d'amortisseur de vibrations torsionnelles selon la revendication 8 ou 9,
**caractérisé en ce que** le disque d'appui (104) est déformable élastiquement.

11. Agencement d'amortisseur de vibrations torsionnelles selon l'une quelconque des revendications 6 à 10,
**caractérisé en ce qu'**entre au moins une tête de rivet (86, 88) et l'élément de disque de recouvrement associé (28, 30) est formé au moins en partie un espace intermédiaire (98) permettant un déplacement axial entre le deuxième élément de liaison (50) et l'élément de disque de recouvrement (28, 30).

12. Agencement d'amortisseur de vibrations torsionnelles selon l'une quelconque des revendications 1 à 11,
**caractérisé en ce qu'**au moins un deuxième élément de liaison (50) en association avec au moins un élément de disque de recouvrement (28, 30) présente une deuxième région d'appui (94, 96) pour l'appui de l'élément de disque de recouvrement (28, 30) contre tout mouvement vers l'autre élément de disque de recouvrement (28, 30).

13. Agencement d'amortisseur de vibrations torsionnelles selon l'une quelconque des revendications 1 à 12,
**caractérisé en ce que** les premiers éléments de liaison (46) sont réalisés sous forme d'éléments de rivetage.

14. Agencement d'amortisseur de vibrations torsionnelles selon l'une quelconque des revendications 1 à 13,
**caractérisé en ce qu'**au moins l'un des éléments de disque de recouvrement (28, 30) s'étend radialement à l'extérieur de l'agencement de ressort amortisseur (42) sur l'autre élément de disque de recouvrement (28, 30) pour fournir un appui radial (48) pour l'agencement de ressort d'amortissement (42).

15. Agencement d'amortisseur de vibrations torsionnelles selon l'une quelconque des revendications 1 à 14,
**caractérisé en ce que** les éléments de disque de recouvrement (28, 30) de l'amortisseur de vibrations torsionnelles (18) fournissent substantiellement un côté, le côté primaire (20) ou le côté secondaire (36) d'un amortisseur de vibrations torsionnelles supplémentaire (16), et l'autre côté, le côté primaire (20) ou le côté secondaire (26) de l'amortisseur de vibrations torsionnelles supplémentaire (16) est fourni substantiellement par un élément de disque central supplémentaire (22) disposé entre les éléments de disque de recouvrement (28, 30), l'élément de disque central supplémentaire (22) pouvant tourner à l'encontre de l'effet d'un agencement de ressort amortisseur supplémentaire (32) par rapport aux éléments de disque de recouvrement (28, 30) autour de l'axe de rotation (A).

16. Agencement d'amortisseur de vibrations torsionnelles selon la revendication 15,
**caractérisé en ce que** l'amortisseur de vibrations torsionnelles supplémentaire (16) est disposé radialement à l'extérieur de l'amortisseur de vibrations torsionnelles (18).

17. Dispositif d'accouplement hydrodynamique, en particulier convertisseur de couple hydrodynamique, comprenant un agencement de d'amortisseur de vibrations torsionnelles (10) selon l'une quelconque des revendications précédentes, dans le chemin de transfert de couple entre un embrayage de pontage (72) et un organe de prise de force (14).

18. Agencement d'accouplement humide, en particulier embrayage à disques, comprenant un agencement d'amortisseur de vibrations torsionnelles (10) selon l'une quelconque des revendications 1 à 16, dans le chemin de transfert de couple entre un agencement de surface de friction et un organe de prise de force.
